# EUROPEAN PATENT APPLICATION

(11) **EP 0 802 045 A1**
(43) Date of publication of application: **22.10.1997**
(21) Application number: 96870049.2
(22) Date of filing: 15.04.1996
(51) Int. Cl.: B32B 27/32, C08J 7/04, B65D 65/40

(54) **Multilayer materials for making packages**

(71) Applicant: THE PROCTER & GAMBLE COMPANY, Cincinnati, Ohio 45202 (US); BASF AKTIENGESELLSCHAFT, 67056 Ludwigshafen (DE)
(72) Inventor: Kaczun, Jürgen, 71229 Leonberg (DE); Hiery, Eva, 74385 Pleidelsheim (DE); Tercalavres, Constant, 3010 Leuven (BE)
(74) Representative: Mather, Peter Geoffrey

(57) **Abstract**

The present invention is a multilayer material for making packages suitable for containing dry or liquid odoriferous products such as detergent compositions. The present invention provides a multilayer material comprising at least a layer of polyolefin-based material and a perfume barrier layer. The perfume barrier layer consists of a one component lacquer. The present invention also provides a package, such as a stand-up refill pouch, made of a material comprising the multilayer material according to the present invention. Such a package being particularly suitable for containing an odoriferous composition, such as fabric and/or household treatment compositions.

## Description

### Technical field

The present invention relates to a multi-layered plastic material having good odour barrier properties and which is suitable to make packages, of the type produced by welding and severing sheets or tubes of plastic material at spaced locations. The multilayer material of the present invention is particularly suitable for making stand-up refill pouches for odoriferous compositions such as laundry and household cleaning compositions.

### Background of the invention

Many and various forms of stand-up plastic containers used as packages for receiving dry, powdered or granular commodities or even flowable products or liquids have been extensively described in the art as well as materials used for making same.

Many of the plastic materials are in the form of multilayer materials comprising different types of materials in order that a variety of demands on properties of such laminates in many fields are met. For example, in the field of detergent packages there are severe demands upon the properties of laminates including for example moisture impermeability, gas impermeability, ultraviolet rays-intercepting property, water-proof property, mechanical strengths, cost, flexibility and the like. It is actually very difficult to satisfy such requirements by using a single material.

For example, EP-A-0 620 156 discloses the use of multi-layer laminations of plastic/paper material or laminates/coextrudates of any plastic material well known in the art such as high and low density polyethylene (HDPE, LDPE). Other materials can be chosen and added to laminates/coextrudates of high and low density polyethylene as a function of the protection needed for the contained product. In particular, for dry odoriferous compositions such as detergent compositions, the package can be made of a multilayer material comprising polyethylene terephthalate (PET) sandwiched between laminates/coextrudates of high and low density polyethylene.

Such a package made of multilayer materials comprising a layer of polyethylene terephthalate possess good barrier properties, e.g. the perfume release through the walls of such a package is minimum. However, laminates comprising polyethylene (PE) and polyethylene terephthalate (PET) are not fully desirable as they are not recyclable after use, as compared to similar laminates without polyethylene terephthalate. Furthermore, such multilayer materials when used to manufacture packages have the drawback that they present quality issues due to the presence of polyethylene terephthalate. Indeed, there is a danger of breaking associated with packages made of such laminates comprising polyethylene (PE) and polyethylene terephthalate (PET) when they withstand high pressures and/or violent shocks, e.g. when the consumer lets such a package fall on the floor. This is because polyethylene terephthalate possesses low ductility at room temperature and does not absorb the impact of a shock. Another drawback associated with such multilayer materials is that they are expensive due to the presence of polyethylene terephthalate.

It is thus an object of the present invention to provide a packaging material that uses materials offering odour barrier characteristics while conferring greater environmental advantages to the packaging material. It is a further object of the present invention to provide such a packaging material at lower cost.

It is another object of the present invention to provide a multilayer material, which allow to make packages for dry or liquid odoriferous compositions, such as laundry or household cleaning compositions comprising perfume, the multilayer material preventing perfume release through the packages.
It is another object of the present invention to provide packages which withstand high pressures and violent shocks without danger of breaking.

It is yet another independent object of the present invention to provide a process allowing for the manufacture of a multilayer material offering good odour barrier characteristics.

These objects are met by providing a multilayer material comprising at least a polyolefin-based material and a perfume barrier layer. The perfume barrier layer comprises a lacquer.

An advantage associated with the multilayer material of the present invention is that the lacquer contained therein is compatible with printing. Indeed the lacquer can be applied on conventional printing presses like flexographic or gravure, sandwiched between other layers or as a frontal printing.

### Summary of the invention

The present invention provides a multilayer material and packages made of a material comprising the multilayer material and a method of making the multilayer material in a manner to satisfy the aforementioned needs.

The present invention encompasses a multilayer material comprising at least a layer of polyolefin-based material and a perfume barrier layer. The perfume barrier layer consists of a one component lacquer.

The present invention also encompasses a package, such as a stand-up refill pouch, made of a material comprising the multilayer material according to the present invention. Such a package being particularly suitable for containing an odoriferous composition, such as fabric and/or household treatment compositions.

### Detailed description of the invention

In order to make the invention more readily understood, reference will now be made to the accompanying drawings, in which:
Figure 1 schematically illustrates the transverse structure of the preferred embodiment of the multilayer material according to the present invention: the perfume barrier layer is sandwiched between two layers of polyolefin-based material.
Figure 2 schematically illustrates the transverse structure of an embodiment of the multilayer material according to the present invention: a layer of polyolefin-based material and the perfume barrier layer.
Figure 3 is a perspective view of a refill pouch in accordance with the present invention made of the multilayer material.

As an essential feature the multilayer material of the present invention comprises a layer of polyolefin-based material. By "polyolefin-based material" it is to be understood herein that all different types of polyolefins and metallocene resins well known in the art including the polyolefin copolymers having olefinic monomers such as ethylene, propylene, butene, and the like, are suitable. Preferred herein are polyethylenes such as low density polyethylene (LDPE), linear low density polyethylene (LLDPE), high density polyethylene (HDPE) and the like. Such polyethylenes are known to those skilled in the art, for example, LLDPE is commercially available from Dow under the trade name Dowlex®.

The layer of polyolefin-based material is either a blended or/and a laminated or/and a coextruded film. Preferred herein are the blended or laminated/coextruded films comprising a low density polyethylene, a linear low density polyethylene, a high density polyethylene, or mixtures thereof. The films may have different thicknesses and densities depending on their use. It is preferred herein to use polyolefin resin films with the highest possible specific density, to minimise stretching of the films and thereby also avoid that cracks appear in the lacquer. The films of the present invention so formed must have a minimum surface tension of 4.0·10⁻² N/m (40 dyn/cm), preferably of 4.2·10⁻² N/m (42 dyn/cm). Indeed, different techniques may be used in order to improve the bond strengths of the films including physical surface treatments, e.g. sand blasting, or chemical surface treatments, e.g. corona discharging and/or application of a primer.

As another essential element the multilayer material of the present invention comprises a perfume barrier layer. The perfume barrier layer comprises a one component lacquer system, the perfume barrier layer having a thickness of from 1 to 20 micrometers, preferably of from 1.5 to 5 micrometers and most preferably of from 2 to 3 micrometers.

The perfume barrier layer according to the present invention consists of a one-component lacquer. Preferably, the one component lacquer is based on polyester resins. The preferred polyester resin is a linear aromatic polyester having a molecular weight in the range between about 5000 to 25000. Preferably, the one component lacquer is solubilized in a solvent, preferably in an ester, like ethyl acetate, forming a lacquer solution. This lacquer solution is prepared before applying the lacquer solution as a perfume barrier lacquer onto a layer of the multilayer material. The solvent in the lacquer solution substantially evaporates away once it is applied onto a layer of the multilayer material leaving the one component lacquer on the layer of the multilayer material. Preferably, from about 15% to about 35%, more preferably from about 20% to 30% of linear aromatic polyester is solubilized in the lacquer solution.

As an optional, the lacquer solution may further comprise an adhesion aid to improve the adhesion of the perfume barrier lacquer to the other layers of the multilayer material according to the present invention. The amount of adhesion aid added in the lacquer solution is in the range between about 0% to 3% of the total amount of the lacquer solution. A preferred adhesion aid is titanium acetyl acetonate. The perfume barrier layer can be applied either on one of the two sides of the layer of polyolefin-based material or on both. Preferably the barrier layer is applied on the side being printed, thus on the side which will form the outside of a package made of the multilayer material of the present invention.

It has been found that the perfume barrier layer according to the present invention has an improved odour barrier characteristics with respect to the two component lacquer system described before. Furthermore, the perfume barrier layer according to the present invention is less susceptible to cracking. Indeed, it has been found that during conversion of the multilayer material according to the present invention into a package on common packing machines, like the Vertical-Form-Fill-Seal (= VFFS) machines, less cracking are observed in the perfume barrier layer. Furthermore, the perfume barrier layer made of a one component lacquer reduces the manufacturing costs of the multilayer material according to the present invention.

Preferably, the multilayer material of the present invention further comprises less than or equal to 25% by weight of the total multilayer material of post consumer recycled plastic (PCR), preferably less than 24% and more preferably less than 22%. The PCR is incorporated in the layer of polyolefin-based material. The PCR has the advantage to be environmental friendly.

In one embodiment of the present invention the multilayer material comprises a first layer of polyethylene and a perfume barrier layer. The first layer has a thickness of from 30 to 200 micrometers, preferably of from 40 to 150 micrometers and most preferably of from 50 to 100 micrometers. In the embodiment the first layer of polyethylene is a coextruded film of LDPE/LLDPE/HDPE.

In a preferred embodiment of the present invention the multilayer material comprises a first layer and a second layer of polyethylene and a perfume barrier layer being sandwiched between the first and the second layer. In such a multilayer material the print is optimally protected against rubs and the product contained in a package made of such material. The first layer of polyethylene on which the advertising messages are printed constitutes the inside layer. The second layer is translucent and constitutes the outside layer. By "inside layer" it is meant herein the layer which will be on the inner side of a package and by "outside layer" it is consequently meant the layer which will be on the outer side of the package made of a material comprising the multilayer material of the present invention. Preferred as first layer is a coextruded film of LDPE/LLDPE/HDPE having a thickness of from 30 to 200 micrometers, preferably of from 40 to 150 micrometers and more preferably of from 50 to 100 micrometers. The first layer further comprises an opacifiant such as titanium oxide. Preferred as second layer is a coextruded film of LDPE/LLDPE having a thickness of from 20 to 50 micrometers, preferably of from 25 to 40 micrometers.

All coating methods known and common for any person skilled in the art may be used to attach the different layers of the multilayer material of the present invention. The present invention is applicable to coating methods using adhesives and to any lamination technique such as heat sealing lamination and extrusion lamination without using any adhesive. Preferred herein is to use non-heat-sealing methods with adhesives capable of achieving a sufficient tight attachment of the layers of the multilayer material. The adhesive commonly used are polyurethane type resin adhesives alone or with any solvent well known to those skilled in the art, such as ethylacetate .

The production of the multilayer material of the present invention is done on coating machines. The perfume barrier layer is preferably applied on the printing press, preferably coated or printed, before, during or after the printing process itself. The following printing techniques can be used to apply the perfume barrier layer according to the present invention: flexographic, gravure, frontal, offset, silk screen. Preferred herein a first layer of polyethylene is unwounded and then the perfume barrier layer of the present invention is printed or coated thereto on a first station of a printing press and then inks are applied on top of the barrier layer using other stations of a printing press. In the embodiment wherein the multilayer material comprises a second layer the layer is adhesively laminated on top of the so formed coated/printed first layer and the formed sandwich is cured to ensure complete crosslinking of the perfume barrier layer and the adhesive.

It has been further found that the one component lacquer according to the present invention is easier to apply through printing with respect to the two component lacquer system described, for example, in EP-A-0 707 956.

Furthermore, the two component lacquer of the prior art, once the two component are mixed together, has a certain time restriction within which the mixed two component lacquer can efficiently be applied as a perfume barrier layer. Indeed, once this time limit, called "potlife", is expired, the mixed two component lacquer cannot be applied further and is definitively wasted. However, it has been found that the one component lacquer according to the present invention does not have this potlife restriction. Therefore, the one component lacquer according to the present invention provides a waste reduction with respect to the two component lacquer of the prior art.

The present invention also encompasses packages made of a material comprising a multilayer material according to the present invention. Preferably the packages are made of a material being in its totality the multilayer material according to the present invention.

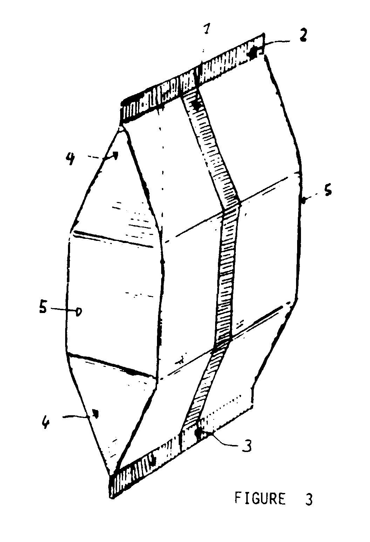

The packages of the present invention may be used as a stand-up refill pouch. This satisfies environmental protection considerations as the pouch can be rolled up after use thereby producing less waste. Such a stand-up refill pouch, as can be seen from figure 3, is formed from a length of generally flat multilayer material according to the present invention, the longitudinal edges of the length being connected together by a longitudinal seal (1), and the opposite ends (2) and (3) of the tube so formed being closed, wherein on one lateral side (5) only a portion of the plastic container adjacent each of the ends is folded inwardly so as to form a gusset (4). Such a pouch will stand on the gusset when presented on the shelf. The straight top located on the opposite side of the gusset in such a pouch is preferably provided with a printed line to indicate to the consumer how to cut the pouch such as to ease and control pouring to the appropriate refillable package. It is also known to produce such pouches having two gussets located on each of their lateral side walls. Such pouches with two gussets respectively located on each of their lateral side walls stand on their bottom transverse seals.

The multilayer material of the present invention is a barrier for odoriferous compositions. By "odoriferous compositions" it is to be understood herein compositions comprising any ingredients having an odour including ingredients having a base odour being either pleasant such as perfumes, or unpleasant, such as fertilisers. The multilayer material of the present invention is suitable to manufacture packages for containing different types of products being either in a dry or in a liquid form such as, but not limited to automatic dishwasher detergents, laundry detergents, softeners and/or hard surface cleaners. More particularly, the package according to the present invention is adequate to contain from conventional unconcentrated detergent products to so called "concentrated" products where the amount of odoriferous ingredients such as perfume is higher as compared to the unconcentrated products, this to obtain the same level of perfume during use, e.g. in a wash solution. Indeed, the package according to the present invention is adequate to contain for example a dry concentrated composition having a bulk density above 600g/l, the compositions containing bleaches such as percarbonate, perborate as well as perfumes. The multilayer material of the present invention is also suitable to be used in other fields such as food, beverage, fertilisers and the like.

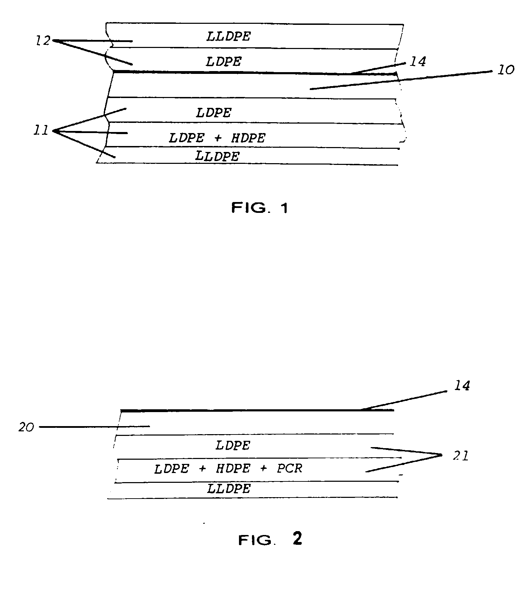

Multilayer material according to the present invention are illustrated in figures 1 and 2 through the transverse structure of the multilayer material.

### Example 1

As can be seen from figure 1, the perfume barrier layer (10) is sandwiched between a first (11) and a second layer (12) of polyolefin-based material. The first layer is a 75 micrometers coextruded film made out of LDPE, LLDPE and HDPE. The first layer is a white pigmented film. The second layer is a 25 micrometers transparent coextruded film made out of LDPE and LLDPE. The perfume barrier layer is Flexoplastol® 1KB -Lacquer 9A 921 847 (BASF Lacke & Farben, Stuttgart). The thickness of the barrier layer is 2-3 micrometers.

In this example the perfume barrier layer (10) is coated onto the first film (11) on the first station of a Flexographic printing press, inks (14) are applied on top of the barrier layer using the other stations of the printing press. The first film has a minimum surface tension of 4.0·10⁻² N/m (40 dyn/cm) (corona treated film) this to obtain good bonding of the perfume barrier layer and inks to the film. The perfume barrier layer is applied by using a very fine Anylox® roller to have the coating as uniform as possible and the weight in wet stage is from 5 to 6 g/m² which corresponds to about 2 g/m² in dry stage. After drying the second film is adhesively laminated on the coated first film. As adhesive a polyurethane based adhesive is used. The perfume barrier layer and print are in sandwich.

This multilayer material is used to produce gusseted refill pouches for detergent powders comprising odoriferous compounds such as perfume. The perfume release through the walls of such a refill pouch made of the multilayer material according to the present invention is reduced as compared to commercially available pouches made for instance only of polyethylene.

### Example 2

As can be seen from figure 2, the perfume barrier layer (20) is applied onto a layer (21) of a polyolefin-based material. The layer is a 70 micrometers coextruded film made of LDPE, LLDPE, HDPE and further contains 24 % of PCR. The perfume barrier layer is Flexoplastol® 1KB -Lacquer 9A 921 847 (BASF Lacke & Farben, Stuttgart). The thickness of the barrier layer is 2-3 micrometers.

The perfume barrier layer (20) is applied on the film (21) on the first station or on the last station of a frontal printing press, inks (14) are also applied using the other stations of the printing press. The film has a minimum surface tension of 4.0·10⁻² N/m (40 dyn/cm) (corona treated film) this to obtain good bonding of the barrier layer and inks to the film. The perfume barrier layer is applied by using a very fine Anylox® roller to have the coating as uniform as possible and the weight in wet stage is from 5 to 6 g/m² which corresponds to about 2 g/m² in dry stage. The perfume barrier layer and print constitute the outside side of the film and will be located on the outside side of a package made of such a material.

This multilayer material is used to produce gusseted refill pouches for detergent powders. The odour release through the walls of the refill pouch made of the multilayer material according to the present invention is reduced as compared to commercially available pouches made for instance only of polyethylene.

## Claims

1. A multilayer material comprising at least a layer of polyolefin-based material and a perfume barrier layer characterized in that the perfume barrier layer consists of a one component lacquer.

2. A multilayer material according to claim 1 characterized in that the one component lacquer is printed onto at least a side of a layer of polyolefin-based material.

3. A multilayer material according to either of the preceding claims characterized in that the one component lacquer is a polyester based resin.

4. A multilayer material according to claim 3 characterized in that the polyester based resin is a linear aromatic polyester having a molecular weight in the range between about 5000 to about 25000.

5. A multilayer material according to any of the preceding claims characterized in that the material comprises a first layer of polyolefin-based material and characterized in that the polyolefin-based material is polyethylene.

6. A multilayer material according to claim 5 characterized in that the polyethylene is a blended or coextruded film comprising a low density polyethylene, a linear low density polyethylene, a high density polyethylene, or mixtures thereof.

7. A multilayer material according to claim 6 characterized in that the blended or coextruded film has a thickness of from 30 to 200 micrometers.

8. A multilayer material according to any of the preceding claims characterized in that the multilayer material further comprises a second layer of polyolefin-based material, preferably polyethylene and more preferably a blended or coextruded film comprising a low density polyethylene, a linear low density polyethylene, a high density polyethylene, or mixtures thereof, the perfume barrier layer being sandwiched between the first and the second layers.

9. A multilayer material according to claim 8 characterized in that the first layer is a coextruded film comprising low density polyethylene/linear low density polyethylene/high density polyethylene and having a thickness of from 40 to 150 micrometers, preferably of from 50 to 100 micrometers and the second layer is a coextruded film comprising low density polyethylene/linear low density polyethylene and having a thickness of from 20 to 50 micrometers, preferably of from 25 to 40 micrometers.

10. A multilayer material according to any of the preceding claims characterized in that the perfume barrier layer having a thickness of from 1 to 20 micrometers, preferably of from 1.5 to 5 and more preferably of from 2 to 3 micrometers.

11. A process for making the multilayer material according to any of the preceding claims characterized in that the one component lacquer is solubilized in an ester forming a lacquer solution before applying the one component lacquer on at least one side of a layer of the multilayer material.

12. A process for making the multilayer material according to claim 5 characterized in that the lacquer solution further comprises an adhesion aid.

13. A package made of a material comprising a multilayer material according to any of the preceding claims.

14. A package according to claim 13 characterized in that the package contains an odoriferous composition.

15. A package according to claim 14 characterized in that the composition comprises a perfume.

16. A package according to any of the claims 13 to 15 characterized in that the package is formed from a length of the material, the longitudinal edges of the length being connected together by a longitudinal seal (1), and the opposite ends (2) and (3) of the tube so formed being also sealed, the pouch on one of its lateral sides (5) only comprises a portion adjacent each of the ends which is folded inwardly so as to form a gusset (4), on which the pouch stands.
